# EUROPEAN PATENT APPLICATION

(11) **EP 1 800 903 A2**
(43) Date of publication of application: **27.06.2007**
(21) Application number: 06021773.4
(22) Date of filing: 17.10.2006
(51) Int. Cl.: B60C 9/18, B60C 9/20

(54) **Heavy duty tire**

(30) Priority: 26.12.2005 JP 2005372663
(71) Applicant: SUMITOMO RUBBER INDUSTRIES, LTD., Hyogo-ken (JP)
(72) Inventor: Tsuda, Satoshi, 3-chome Chuo-ku Kobe-shi Hyogo-ken (JP)
(74) Representative: Manitz, Finsterwald & Partner GbR

(57) **Abstract**

The heavy duty tire comprises a belt layer (7) comprised of at least three belt plies outside of a carcass (6) in a radial direction. Belt cords of a first belt ply (7A) disposed innermost in the radial direction incline at an angle of 45 to 55 degrees with respect to a tire equator C. Belt cords of second and third belt plies (7B,7C) disposed outside thereof incline at an angle of 16 to 22 degrees with respect to the tire equator C and into mutually opposite directions. Width BW3 of the third belt ply (7C) is smaller than width BW2 of the second belt ply 7B and is also 77 to 95% of a tread grounding width TW. Width BW1 of the first belt ply (7A) is smaller than the width BW3 of the third belt ply (7C) by 20 to 35mm. An inter-cord distance S between the first belt ply (7A) and the carcass ply (6A) in the tire radial direction is 0.8 to 1.2 mm. Preferably, an insulation rubber layer (10) is disposed between the carcass (6) and the first belt ply (7A).

## Description

### BACKGROUND OF THE INVENTION

### Field of the Invention

The present invention relates to a heavy duty tire employing steel cords for its carcass and belt layer, and particularly to a heavy duty ti re capable of achieving cost reductions without harming durability.

### Description of the Prior Art

Heavy duty tires employed for heavy-weight vehicles such as trucks and buses are reinforced by a carcass made of a carcass ply aligned with steel cords and a belt layer that is comprised of three or four sheets of belt plies aligned with steel cords and that is disposed outside of the carcass (see, for instance, Publication of PCT Patent Application in Japan 2003-35413).

The inventors of the present invention have made various studies on functions of respective plies of belt layers of such heavy duty tires.

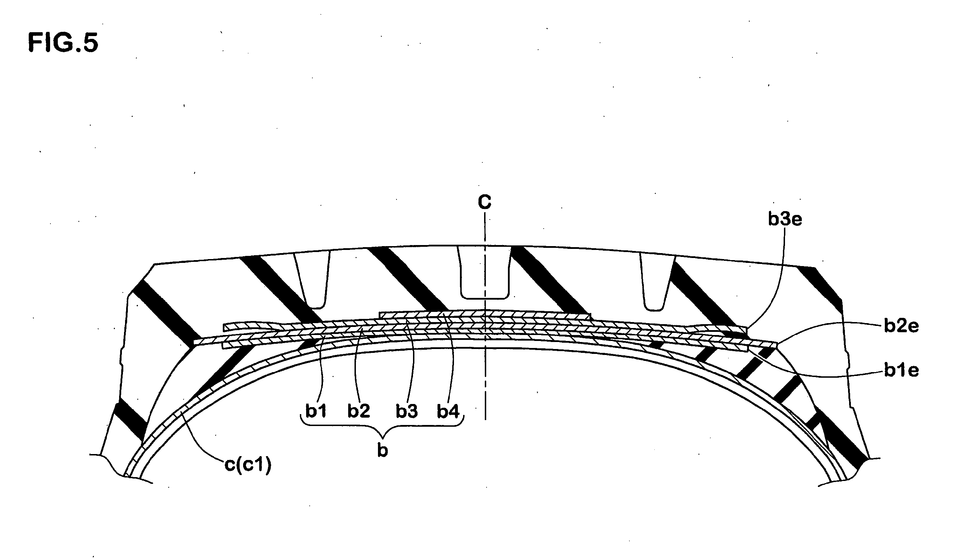

Fig. 5 shows a partial sectional view of a tread portion of a heavy duty tire.

When first defining respective belt plies of the belt layer (b) as first, second, third and fourth belt plies (b1, b2, b3 and b4) in this order from the innermost side in the tire radial direction, the second and third belt plies (b2, b3) generally exhibit basic functions of the belt layer (b), that is, hoop-fastening the carcass (c) and applying high rigidity to the tread portion. For this purpose, the second and third belt plies (b2, b3) are arranged in that their angle of the belt cords with respect to the tire equator is small and in that the belt cords intersect among the plies. However, when respective edges (b2e, b3e) of the second and third belt plies (b2, b3) are orderly aligned, a remarkable rigidity step will be caused at this spot so that the third belt ply (b3) is generally formed to have a smaller width than the second belt ply (b2). With this arrangement, a step of approximately 5 mm will be formed between the edges (b2e and b3e).

Next, the first belt ply b1 is considered to have an important action of easing distortion generated between the second belt ply (b2) and the carcass ply (c1). However, similar to the third belt ply (b3), a rigidity step will be caused when the edge ble of the first belt ply (b1) aligns the second belt ply (b2). Thus, it is common practice with such types of tires that the first belt ply (b1) is formed to have a width substantially identical to that of the third belt ply (b3).

However, for achieving further cost reductions in tires, it is effective to reduce the amount of used steel cords by, for instance, decreasing the width of the belt plies. As mentioned above, reduction in the width of the second and third belt plies (b2, b3) would harm basic functions of the belt layer (b). More particularly, such reduction can not be employed since it will lead to degradations in the rigidity of the tread portion which will degrade basic durability of the tire. Further, simply reducing the width of the first belt ply (b1) will lead to degradations in distortion easing performance between the second belt ply (b2) and the carcass ply (c1) which, in turn, will lead to degradations in durability.

The present invention has been made in view of such problems, and it is an object thereof to provide a heavy duty tire capable of achieving cost reductions without harming durability on the basis of a structure in which the first belt ply is formed to have a smaller width than conventional and in which the inter-cord distance between the first belt layer and the carcass ply is increased.

### SUMMARY OF THE INVENTION

According to one aspect of the present invention, there is provided a heavy duty tire comprising a carcass that extends from a tread portion over sidewall portions up to bead cores of bead portions, and a belt layer that is disposed outside of the carcass in the tire radial direction and inward of the tread portion,
wherein the carcass is comprised of a single carcass ply in which carcass cords made of steel cords are aligned in a radial direction,
wherein the belt layer is comprised of at least three belt plies in which belt cords made of steel cords are aligned,
the at least three belt plies including
a first belt ply disposed on a radially innermost side with the belt cords being inclined at an angle (θ1) of 45 to 55 degrees with respect to a tire equator,
a second belt ply disposed radially outside thereof with the belt cords being inclined at an angle (θ2) of 16 to 22 degrees with respect to the tire equator, and
a third belt ply disposed radially outside thereof with the belt cords being inclined at an angle (θ3) of 16 to 22 degrees with respect to the tire equator and also inclined in a direction opposite to that of the belt cords of the second belt ply,
wherein the third belt ply has a width (BW3) corresponding to 77 to 95% of a tread grounding width (TW),
the second belt ply has a width (BW2) that is larger than the width of the third belt ply (BW3), and
the first belt ply has a width (Bw1) that is smaller than the width of the third belt ply (BW3) by 20 to 35 mm, and
wherein an inter-cord di stance (S) in the tire radial direction between the first belt ply and the carcass ply on the tire equator is 0.8 to 1.2 mm.

The complex elastic moduli are values obtained by measuring strip-like samples having a dimension of 4 mm width × 30 mm length × 1.5 mm thickness using a viscoelasticity spectrometer under the following conditions: temperature 70°c, frequency 10 Hz and dynamic strain ±2%.

Unless noted otherwise, dimensions of respective parts of the tires are deemed to be values that have been specified in a normal internal pressure condition of the tires in the present descriptions. A normal internal pressure condition is a condition in which a tire is assembled to a normal rim, filled with normal internal pressure and is in a no-load condition. The term "normal rim" denotes a rim defined for each tire in accordance with a standardizing system including the standard on which the tire is based, and is defined to be a normal rim according to JATMA, a "design rim" according to TRA and a "measuring rim" according to ETRTO. The "normal internal pressure" denotes an air pressure that is defined for each tire in accordance with a standardizing system thereof, and is defined to be a maximum air pressure according to JATMA, a maximum value as recited in the table of "tire load limits at various cold inflation pressures" according to TRA, and "inflation pressure" according to ETRTO.

As described above, the present invention is arranged in that the width of the first belt ply is formed to be smaller than the width of the third belt ply by 20 to 35 mm. Accordingly, the amount of using belt cords in the belt layer is reduced so that cost reductions may be achieved. The inter-cord distance between the first belt ply and the carcass ply on the tire equator is formed to be larger than conventionally, namely 0.8 to 1.2 mm. The distortion easing capability between the second belt ply and the carcass ply will be maintained by the rubber-interposed between the cords so that degradations in durability can be restricted.

### BRIEF DESCRIPTION OF THE DRAWINGS

Fig. 1 is a sectional view of a tire according to one embodiment of the present invention;
Fig. 2 is a partial enlarged view of a tread portion thereof;
Fig. 3 is an exploded view of a belt layer showing alignment of belt cords;
Fig. 4 is a partial sectional view along A-A in Fig. 2; and
Fig. 5 is a partial sectional view of a tread portion of a conventional heavy duty tire.

### DETAILED DESCRIPTION OF THE PREFERRED EMBODIMENTS

One embodiment of the present invention will now be explained on the basis of the drawings.

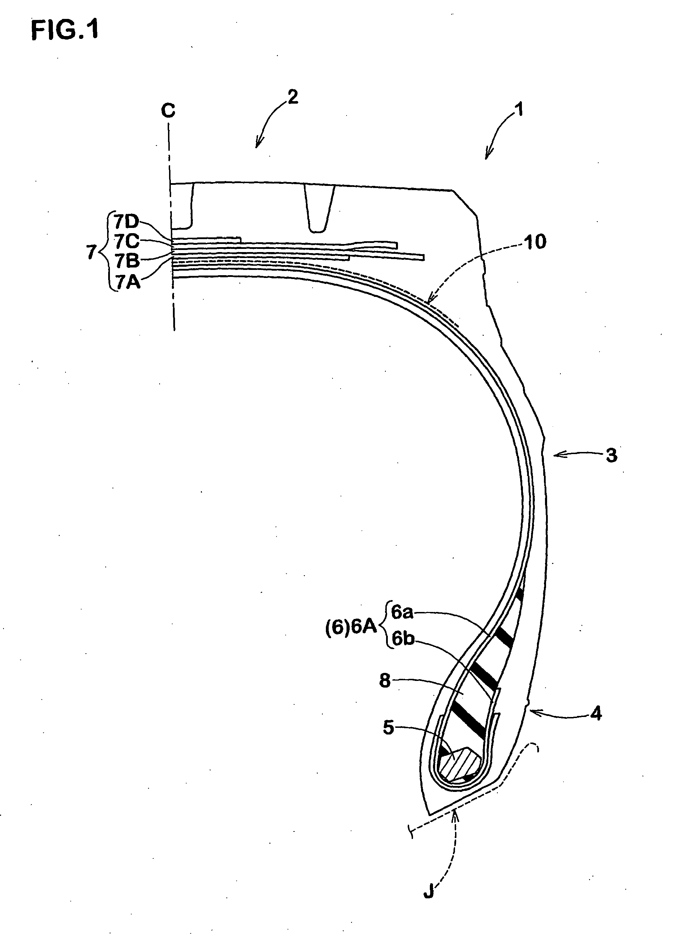

Fig. 1 is a sectional view of a heavy duty tire 1 in the normal internal pressure condition.

As shown in Fig. 1, the heavy duty tire 1 comprises a toroidal carcass 6 that extends from a tread portion 2 over sidewall portions up to bead portions 4, and a belt layer 7 that is disposed outside of the carcass 6 in a radial direction and inward of the tread portion 2. The present embodiment illustrates a case in which the heavy duty tire 1 is a tubeless tire.

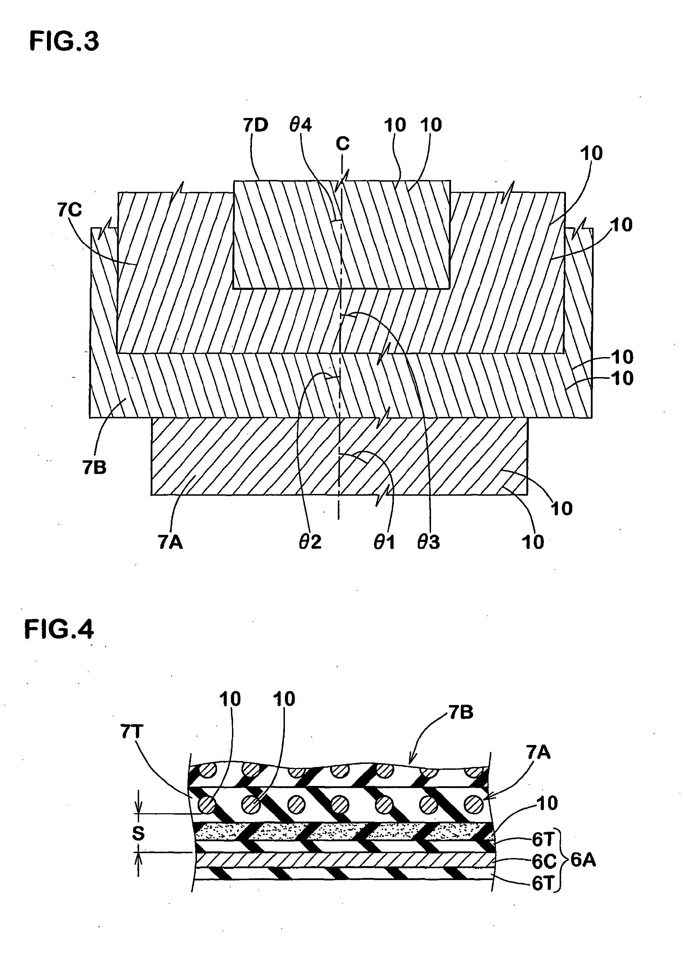

The carcass 6 is comprised of a single carcass ply 6A aligned with carcass cords 6C which are steel cords. As shown in Fig. 4, the carcass ply 6A is comprised of a cord ply in which both surfaces of an arrangement body of the carcass cords 6C are coated with topping rubber 6T.

The carcass ply 6A is arranged in that the carcass cords are aligned in a radial direction, that is, at an angle of 75 to 90 degrees, and more preferably 80 to 90 degrees, with respect to the tire equator C. The carcass ply 6A comprises a ply main body portion 6a that bridges in a toroidal shape between the bead cores 5, 5 and turnup portions 6b that continue from the ply main body portion 6a and that are turned up around the bead cores 5 from inside to outside in the tire axial direction. Bead apex rubbers 8 having a triangular section extending from the bead cores 5 outward in the tire radial direction are disposed between the ply main body portion 6a and the turnup portions 6b. The bead apex rubber 8 is formed of a rubber that is harder than the topping rubber 6T.

The belt layer 7 is comprised of at least three sheets (while four sheets are employed in the present embodiment) in which belt cords made of steel cords are aligned. The cord arrangement of the steel cords and the alignment density of the cords are not particularly limited and may be suitably defined in accordance with customary practice. However, steel cords of, for instance, 1×5×0.38 or the like are favorably used, and the alignment density is desirably approximately 18 to 27 (cords/5 cm).

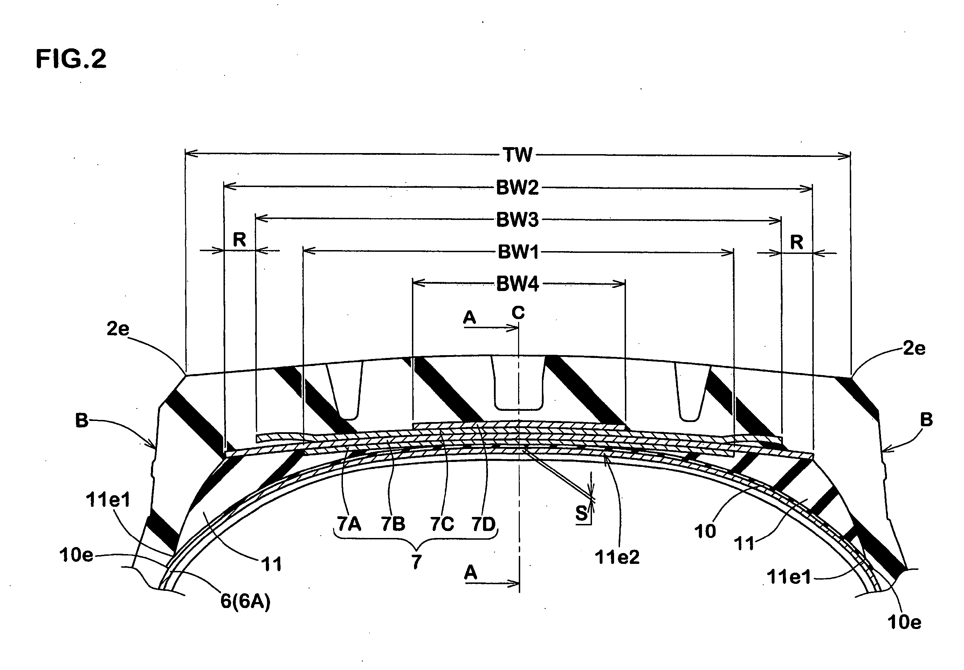

Fig. 2 shows an enlarged section of the tread portion, and Fig. 3 shows a view of the belt layer 7 being exploded in a planar form. As it is evident from Figs. 2 and 3, the belt layer 7 of the present example is formed of first to fourth belt plies 7A to 7D that are disposed in this order from radially inside to outside. The fourth belt ply 7D may be omitted upon request. In the first belt ply 7A that is disposed on the radially innermost side, the belt cords 10 are aligned at an angle θ1 of 45 to 55 degrees with respect to the tire equator C. In the second belt ply 7B, the belt cords 10 are aligned at an angle θ2 of 16 to 22 degrees with respect to the tire equator C. In the third belt ply 7C, the belt cords 10 are aligned at an angle θ3 of 16 to 22 degrees with respect to the tire equator C and further in a direction opposite to the belt cords 10 of the second belt ply 7B. In this respect, the fourth belt ply 7D is not particularly limited, and the present embodiment illustrates a case in which the belt cords 10 are aligned at the angle θ4 of 16 to 22 degrees with respect to the tire equator C. Each of the belt plies 7A to 7D are arranged such that their width centers are substantially located on the tire equator C.

In the present embodiment, directions of inclination of respective angles θ1, θ2 , θ3 and □θ4 with respect to the tire equator Care sequentially varied. More particularly, in Fig. 3, the direction of inclination of angle θ1 is sloping from bottom left to top right while the direction of inclination of angle θ2 is sloping from top left to bottom right, and the direction of inclination of angle θ3 is sloping from bottom left to top right while the direction of inclination of angle θ4 is sloping from top left to bottom right. In this manner, the belt cords 10 are overlapped to intersect between adjoining belt plies. However, the present invention is not limited to such an embodiment.

The angle θ1 for the first belt ply 7A is defined for sufficiently exhibiting distortion easing performances between the second belt ply 7B and the carcass ply 6A. More particularly, when the angle θ1 is less than 45 degrees, the distortion easing performance in a ply width direction is apt to be degraded while when it exceeds 55 degrees, the distortion easing performance in a tire peripheral direction is apt to be degraded. In view of this fact, the angle θ1 is desirably not less than 48 degrees and not more than 52 degrees.

The angles θ2 and θ3 of the second and third belt plies 7B, 7C function to increase rigidity by hoop-fastening the carcass 6 of the tread portion 2 and al so secure durability and steering stability. When the angles θ2 and θ3 are less than 16 degrees, it will be impossible to exhibit sufficient cornering power when performing turning movements or the like while when they exceed 22 degrees, the hoop-fastening effects to the tread portion 2 tends to be degraded. In view of this fact, the angles θ2 and θ3 are preferably not less than 18 degrees and not more than 20 degrees.

The width Bw2 of the second belt ply 7B in the tire axial direction is largest from among the plies of the belt layer 7. while the width Bw3 of the third belt ply 7C in the tire axial direction is smaller than the width BW2 of the second belt ply 7B, this width Bw3 is set to be in a range of 77 to 95% of the tread grounding width TW. With this arrangement, steps R will be formed at respective end portions between the second belt ply 7B and the third belt ply 7C at which the respective ply edges are offset in the tire axial direction, it is possible to restrict damages such as ply edge separation. For this reason, the difference between the width BW2 and width BW3 (BW2-BW3) is preferably 10 to 20 mm.

Further, the third belt ply 7C has a sufficiently large width Bw3 that corresponds to 77 to 95% of the tread grounding width TW (of course, the width Bw2 of the second belt ply 2 is larger than this). Therefore, the plies 7B and 7C can sufficiently hoop-fasten the carcass over a wide range of the tread portion 2, and the rigidity of the tread portion 2 can be effectively increased.

Here, when the width BW3 of the third belt ply 7C is less than 77% of the tread grounding width TW, the rigidity of the tread portion is reduced so that the basic durability of the tire is apt to be degraded and the steering stability and wear resistance are similarly degraded. On the other hand, when the width BW3 of the third belt ply 7C exceeds 95% of the tread grounding width TW, edges of the belt ply 7B or 7C come closer to a buttress surface B at which distortion is focused, and ply edge loosening is apt to occur. In view of this fact, the lower limit of the width BW3 of the third belt ply 7C is preferably not less than 80% of the tread grounding width TW while its upper limit is preferably not more than 90%.

Here, the term "tread grounding width" is defined to be an axial distance between axially outermost grounding ends 2e, 2e of the tread portion 2 when normal load is applied to a tire in a normal internal pressure condition and the tread portion 2 is made to ground on a flat surface at an camber angle of 0.

Further, the term "normal load" denotes load that is defined for each tire in accordance with a standardizing system thereof, and is defined to be a maximum load capacity according to JATMA, a maximum value as recited in the table of "tire load limits at various cold inflation pressures" according to TRA, and "load capacity" according to ETRTO.

The width BW1 of the first belt ply 7A in the tire axial direction is formed to be smaller than the width BW3 of the third belt ply 7C of Fig. 3 by 20 to 35 mm, and as shown in Fig. 4, the inter-code distance S between the first belt ply 7A and the carcass ply 6A is set to be 0.8 to 1.2 mm. The inter-code distance S is a radial distance between the cords 10 of the first belt ply 7A and the carcass cords 6C of the carcass ply 6A measured on the tire equator C, and is deemed to be an average of values measured on three positions separate from each other at equal intervals in the tire peripheral direction. In this respect, a conventional inter-code distance S is approximately 0.5 mm.

Upon conducting various experiments, the inventors of the present invention have found out that by reducing the width BW1 of the first belt ply 7A, the distortion easing capacity between the second belt ply 7B and the carcass ply 6A is degraded so that the basic durability of the tire is degraded. However, they have come to know that when the inter-code distances between the first belt ply 7A and the carcass ply 6A is increased in connection therewith, the rubber interposed between will increase adhesive drag between both members and the distortion easing capacity secured so that it is possible to prevent degradations in durability. Accordingly, by reducing the amount of steel cords being used by reducing the ply wi dth of the belt layer in the heavy duty tire 1 of the present invention, it is possible to achieve cost reduction without harming the durability.

In this respect, when the difference between the width BW3 of the third belt ply 7C and the width BW1 of the first belt ply 7A (BW3-BW1) is less than 20 mm, effects of achieving cost reduction cannot be sufficiently expected. On the other hand, when it exceeds 35 mm, the durability of the tire tends to be degraded even if the inter-code distances is increased.

Further, when the inter-code distances is less than 0.8 mm, the distortion easing capacity between the second belt ply 7B and the carcass ply 6A cannot be sufficiently exhibited when the width BW1 of the first belt ply 7A is reduced so that the durability of the tire is degraded. On the other hand, when the inter-code distance S exceeds 1.2 mm, lack in cornering power and other deficiencies will be caused so that the steering stability is degraded. None of them can accordingly be employed.

Various methods may be employed for reliably securing the above-mentioned inter-code distance S. For instance, by setting the thickness of the topping rubber 7T that coats the belt cords 10 of the first belt ply 7A and/or that of the topping rubber 6T that coats the carcass cords 6C of the carcass ply 6A, the above-mentioned inter-code distance S can be easily realized.

In another embodiment, it is desirable to dispose an insulation rubber 10 of different composition than those of the topping rubbers 6T, 7T between the first belt ply 7A and the carcass ply 6A as shown in Figs. 1 and 4. The insulation rubber 10 has a uniform thickness and may be easily formed by adhering a thin rubber sheet that comprises the insulation rubber outside of the carcass ply 6A.

Here, when the complex elastic modulus of the insulation rubber 10 is too small, the steering stability tends to be degraded while the distortion easing capacity is improved, and on the other hand, when it is too large, the distortion easing capacity might be degraded while the steering stability can be improved. In view of this fact, the lower limit for the complex elastic modulus of the insulation rubber 10 is preferably not less than 6.0 MPa, more preferably not less than 7.0 MPa, and even more preferably not less than 7.5 MPa while the upper limit for the complex elastic modulus is preferably not more than 9.0 MPa, and more preferably not more than 8.5 MPa in view of distortion easing capacity.

Further, as shown in Fig. 2, the insulation rubber 10 of the present embodiment extends into both sides in the tire axial direction upon contacting the outer surface of the carcass ply 6A. In the present embodiment, both side edges 10e, 10e of the insulation rubber 10 are located further outside in the tire axial direction than the axially outside edges 11e1 of cushion rubbers 11. In other words, the cushion rubbers 11 having a substantially triangular section that fill the space between the belt layer 7 and the carcass 6 are also adhered to the carcass 6 through the insulation rubber 10. The insulation rubber 10 can thus absorb distortion between the cushion rubber 11 and the carcass 6 as well, and peel i ng between both members is restricted to thus exhibit high durability.

In this respect, the cushion rubbers 11 are pieces of rubber that are filled between the axially outer end portion of the belt layer 7 and the carcass 6 for suitably maintaining a warped shape on the shoulder side of the carcass 6, and each assumes a substantially tri angul ar section having a maximum thickness at the outer end position of the second belt ply 7B and reducing in thickness from the maximum thickness position towards in and outside in the tire axial direction. The inner edge 11e2 of the cushion rubber 11 in the tire axial direction terminates in a region between the outer end of the first belt ply 7A and the tire equator C. Accordingly, the inter-code distance S is substantially uniform in the range of 0.8 to 1.2 mm in the region between the inner end 11e2 of the cushion rubber 11 in the tire axial direction and the tire equator C. The present embodiment illustrates a case in which the complex elastic modulus of the cushion rubber 11 is larger than the complex elastic modulus of the insulation rubber 10. However, it is also possible to set the complex elastic modulus of the cushion rubber 11 and the complex elastic modulus of the insulation rubber 10 to be equal, and vise versa, to set the complex elastic modulus of the cushion rubber 11 to be smaller than the complex elastic modulus of the insulation rubber 10.

The belt layer 10 of the present embodiment includes the fourth belt ply 7D. The belt ply 7D mainly serves to improve cut resistance and injury resistance and to ease distortion between the tread rubber and the third belt ply 7C. The width BW4 of the fourth belt ply 7D is desirably formed to be of small width corresponding, for instance, to 30 to 45% of the tread grounding width TW. The fourth belt ply 7D can be omitted for the purpose of cost reduction and light-weighted structure.

While an embodiment of the present invention has been explained so far, the present invention can be embodied upon modifying the same into various forms.

### EXAMPLES

Heavy duty tires (size 11R22.5) having the basis structure of Fig. 1 were manufactured on trial according to the specifications of Table 1, and their durability and breaking energy were measured. In this respect, for securing an inter-cord distance S, an insulation rubber having a complex elastic modulus of 8.0 MPa was employed.

The testing methods were as follows.

### <Durability>

Respective sample tires were made to run on a drum tester having a 1.7 m diameter drum, and running times until damages were caused were measured. Evaluations were made as indices with the running time of comparative Example 1 being defined as 100. The larger the value, the more favorable it is.
Rim: 8.25 × 22.5
Internal pressure: 700 kPa
Load: 32.06 kN
velocity: 30 km/H

### <Breaking energy>

This test is for testing tire strength. Each sample tire was assembled to a rim (8.25×22.5) and filled with an internal pressure of 700 kPa, and a plunger breaking test was performed in conformity with JIS D4230. The breaking energy at that time was indicated as an index with that of the comparative Example 1 being defined as 100. The larger the value, the more favorable it is. In this respect, tests were performed using both, new tires and used tires. The used tires were made to run 70,000 km/H on the drum tester having a 1.7 m diameter drum under the following conditions.
Internal pressure: 700 kPa
Load: 26.72 kN
velocity: 30 km/H
Test results and others are indicated in Table 1.

**Table 1**

| | | Comparative Example 1 | Comparative Example 2 | Comparative Example 3 | Comparative Example 4 | Comparative Example 5 | Comparative Example 6 |
|---|---|---|---|---|---|---|---|
| Tread grounding width TW | [mm] | 220 | | | | | |
| Width BW4 of fourth belt ply | [mm] | 38 | 38 | 38 | 38 | 38 | 38 |
| Width BW3 of third belt ply | [mm] | 176 | 166 | 176 | 176 | 162 | 176 |
| Width BW2 of second belt ply | [mm] | 196 | 186 | 196 | 196 | 182 | 196 |
| Width BW1 of first belt ply | [mm] | 172 | 146 | 156 | 172 | 158 | 154 |
| Ratio (BW3/TW) | [%] | 80.0 | 75.5 | 80.0 | 80.0 | 73.6 | 80.0 |
| Difference (BW3-BW1) | [mm] | 4 | 20 | 20 | 4 | 4 | 22 |
| Inter-code distance S | [mm] | 0.5 | 1.1 | 0.5 | 1.0 | 1.0 | 1.3 |
| Cost | [index] | 100 | 97 | 97 | 101 | 97 | 99 |
| Durability | [index] | 100 | 99 | 100 | 101 | 95 | 107 |
| Breaking energy (when new) | [index] | 100 | 102 | 99 | 103 | 100 | 110 |
| Breaking energy (when used) | [index] | 100 | 103 | 100 | 105 | 102 | 110 |
| | | | | | | | |
| | | Example 1 | Example 2 | Example 3 | Example 4 | Example 5 | Example 6 |
| Tread grounding width TW | [mm] | 220 | | | | | |
| Width BW4 of fourth belt ply | [mm] | 38 | 38 | 38 | 38 | 38 | 38 |
| Width BW3 of third belt ply | [mm] | 176 | 176 | 178 | 176 | 176 | 176 |
| Width BW2 of second belt ply | [mm] | 196 | 196 | 198 | 196 | 196 | 196 |
| Width BW1 of first belt ply | [mm] | 156 | 154 | 154 | 156 | 156 | 154 |
| Ratio (BW3/TW) | [%] | 80.0 | 80.0 | 80.9 | 80.0 | 80.0 | 80.0 |
| Difference (BW3-BW1) | [mm] | 20 | 22 | 24 | 20 | 20 | 22 |
| Inter-code distance S | [mm] | 0.8 | 1.1 | 1.0 | 1.0 | 1.1 | 1.2 |
| Cost | [index ] | 98 | 98 | 98 | 98 | 98 | 99 |
| Durability | [index] | 103 | 105 | 105 | 105 | 105 | 106 |
| Breaking energy (when new) | [index] | 103 | 107 | 105 | 105 | 107 | 107 |
| Breaking energy (when used) | [index] | 105 | 107 | 106 | 106 | 108 | 108 |

It could be confirmed through the tests that the tire of the present example significantly improves durability.

## Claims

1. A heavy duty tire comprising a carcass that extends from a tread portion over sidewall portions up to bead cores of bead portions, and a belt layer that is disposed outside of the carcass in the tire radial direction and inward of the tread portion,
wherein the carcass is comprised of a single carcass ply in which carcass cords made of steel cords are aligned in a radial direction,
wherein the belt layer is comprised of at least three belt plies in which belt cords made of steel cords are aligned,
the at least three belt plies including
a first belt ply disposed on a radially innermost side with the belt cords being inclined at an angle (θ1) of 45 to 55 degrees with respect to a tire equator,
a second belt ply disposed radially outside thereof with the belt cords being inclined at an angle (θ2) of 16 to 22 degrees with respect to the tire equator, and
a third belt ply disposed radially outside thereof with the belt cords being inclined at an angle (θ3) of 16 to 22 degrees with respect to the tire equator and also inclined in a direction opposite to that of the belt cords of the second belt ply,
wherein the third belt ply has a width (Bw3) corresponding to 77 to 95% of a tread grounding width (Tw),
the second belt ply has a width (BW2) that is larger than the width of the third belt ply (BW3), and
the first belt ply has a width (BW1) that is smaller than the width of the third belt ply (BW3) by 20 to 35 mm, and
wherein an inter-cord distance (S) in the tire radial direction between the first belt ply and the carcass ply on the tire equator is 0.8 to 1.2 mm.

2. The heavy duty tire as claimed in claim 1, wherein the width of the second belt ply (BW2) is larger than the width of the third belt ply (Bw3) by 10 to 20 mm.

3. The heavy duty tire as claimed in claim 1, wherein an insulation rubber having a complex elastic modulus of 6 to 9 MPa is disposed between the first belt ply and the carcass ply.

4. The heavy duty tire as claimed in claim 1, wherein the direction of inclination of the belt cords of the first belt ply with respect to the tire equator C is different from the direction of inclination of the belt cords of the second belt ply with respect to the tire equator C.

5. The heavy duty tire as claimed in claim 3, wherein the insulation rubber has a uniform thickness.

6. The heavy duty tire as claimed in Claim 3, wherein a piece of cushion rubber is disposed between an outer end portion of the belt layer in a tire axial direction and the carcass, the cushion rubber having a maximum thickness at axially outer end of the second belt ply 7B and assuming a substantially triangular shaped section in which the thickness reduces from the maximum width position towards in and outside in the tire axial direction, and
wherein the insulation rubber contacts an outer surface of the carcass and extends to both sides in the tire axial direction, both axially outer ends of the insulation rubber being located further outward in the tire axial direction than the axially outer ends of the cushion rubber.

7. The heavy duty tire as claimed in claim 6, wherein an axially inner end of the cushion rubber is located between the axially outer end of the first belt ply 7A and the tire equator C.
